# EUROPEAN PATENT APPLICATION

(11) **EP 1 930 793 A1**
(43) Date of publication of application: **11.06.2008**
(21) Application number: 07023296.2
(22) Date of filing: 30.11.2007
(51) Int. Cl.: G04B 31/08, F16C 33/20

(54) **Timepiece component and timepiece having the timepiece component**

(30) Priority: 04.12.2006 JP 2006326777; 07.08.2007 JP 2007205494
(71) Applicant: Seiko Epson Corporation, Tokyo 160-0811 (JP); National University Corporation Shinshu University, Matsumoto-shi, Nagano 3908621 (JP)
(72) Inventor: Fujimori, Akihiro, Suwa-shi, Nagano-ken 392-8502 (JP); Murai, Masami, Suwa-shi, Nagano-ken 392-8502 (JP); Arai, Susumu, c/o Shinshu University, Nagano-shi, Nagano-ken 380-8553 (JP)
(74) Representative: HOFFMANN EITLE

(57) **Abstract**

In a timepiece component that has a sliding friction part that slides in contact with another timepiece component, or a switching part that changes the contact state with another timepiece component in response to an operation operating the timepiece, the contact surface of the sliding friction part or switching part is coated with a composite plating having graphite mixed with a metal plating, and the composite plating is formed by an electroplating process.

## Description

### BACKGROUND

### 1. Field of Invention

The present invention relates to a timepiece component and to a timepiece having the timepiece component.

### 2. Description of Related Art

Timepieces that move hands using energy from a battery or spring are known from the literature. Such timepieces use timepiece components that have sliding friction parts that slide in contact with other timepiece parts and switching parts that change the contact state with other timepiece parts as a result of an operation adjusting the timepiece. Examples of timepiece components that have a sliding friction part include pivots and the pinions in a timepiece wheel train, and examples of timepiece components that have a switching part include the setting lever of the hand adjustment mechanism and the yoke.

Special horological oils are used to impart wear resistance and lubrication to these sliding friction parts and switching parts because they tend to wear easily due to point contact with other timepiece parts.

Composite plating that has fine particles mixed in a metal matrix are also known from the literature. Composite plating enables forming a coating with outstanding hardness, wear resistance, lubricity, and other desirable characteristics by appropriately selecting the metal matrix and particle materials. See, for example, Japanese Unexamined Patent Appl. Pub. JP-A-2003-156575.

The composite plating taught in JP-A-2003-156575 mixes graphite or other fine particles with a nickel plating as the metal matrix by means of an electroless plating process, and can prevent separation of the coating on the surface of timepiece components, particularly the pinions used to attach hands such as the hour hand and the minute hand.

While the composite plating taught in JP-A-2003-156575 can prevent separation of the coating on the surface of the pinions used to attach hands such as the minute hand and the hour hand, the surface of the composite plating is not sufficiently smooth because the composite plating is applied by an electroless process. More specifically, the problem with applying the composite plating taught in JP-A-2003-156575 for the purpose of imparting wear resistance and lubricity to sliding friction parts and switching parts of timepiece components is that sufficient wear resistance and lubricity cannot be imparted.

### SUMMARY

A timepiece part according to the present invention improves the wear resistance and lubricity of sliding friction parts and switching parts.

A timepiece component according to a first aspect of the invention is a timepiece component having a sliding friction part that slides in contact with another timepiece component, or a switching part that changes the contact state with another timepiece component in response to an operation operating the timepiece, wherein the contact surface of the sliding friction part or switching part is coated with a composite plating having graphite mixed with a metal plating, and the composite plating is formed by an electroplating process.

The contact surface of the sliding friction part or switching part is thus coated with a composite plating having graphite mixed with a metal plating. By using an electroplating process to apply the composite plating, the composite plating fills fine asperities in the contact surfaces of the sliding friction parts or switching parts, the surface of the resulting composite plating is smoother than when the composite plating is formed by an electroless process, the coefficient of friction is further reduced, and the wear resistance and lubricity can be improved.

Because the surface of the composite plating is already sufficiently smooth, lubricating the sliding friction part or switching part of the timepiece component with a horological oil can further reduce the coefficient of friction.

Minute high spots on the contact surfaces of the sliding friction part or switching part of the timepiece component also wear down with use and produce substantially spherical graphite particles, and these substantially spherical graphite particles fill minute recesses in the contact surface. The effect is to further smoothen the surface of the composite plating.

When the timepiece components are manufactured, friction with the sliding friction part or switching part of the timepiece components is the result of surfaces sliding against each other, but when the substantially spherical graphite particles fill minute low spots in the contact surfaces through use, the contact surfaces roll on the substantially spherical graphite particles. More specifically, the coefficient of friction results from sliding resistance when the timepiece component is manufactured, but as the timepiece component is used changes to the coefficient of friction resulting from rolling resistance. Because the coefficient of friction is generally lower with rolling resistance than sliding resistance, the timepiece component of the present invention can further reduce the coefficient of friction and improve wear resistance and lubricity with use.

Preferably, the metal plating is nickel plating.

Because nickel is well-suited to electroplating processes, the composite plating can be easily formed on timepiece components using an electroplating process. Imparting a nickel plating also protects the timepiece components against corrosion.

Further preferably, the composite plating is formed using a dispersing agent, the particles of graphite are fully or partially embedded in the metal plating, and the parts of the graphite particles that are not embedded in the metal plating are exposed at the surface of the metal plating and form a graphite layer.

With this arrangement other timepiece components contact the graphite forming a layer ("graphite layer" below) on the sliding friction part or switching part of the coated timepiece components. Because graphite is self-lubricating, the graphite reduces the coefficient of friction and improves wear resistance and lubricity.

Further preferably, the diameter of the graphite particles is greater than or equal to 10 nm and less than or equal to 100 nm.

If the diameter of the graphite particles is less than 10 nm, a sufficient graphite layer cannot be formed, and the wear resistance and lubricity of the contact surfaces of the sliding friction part or switching part cannot be sufficiently improved. If the diameter of the graphite particles is greater than 100 nm, the wear resistance and lubricity of the contact surfaces of the sliding friction part or switching part can be improved, but the increase in wear resistance and lubricity is not proportional to the increased diameter of the graphite particles, and graphite wastefully included in the metal plating. The diameter of the graphite particles is therefore preferably greater than or equal to 10 nm and less than or equal to 100 nm.

Further preferably, the content of the graphite to the metal plating is greater than or equal to 0.01 wt% and less than or equal to 1 wt%.

If the content of the graphite to the metal plating is less than 0.01 wt%, a sufficient graphite layer cannot be formed, and the wear resistance and lubricity of the contact surfaces of the sliding friction part or switching part cannot be sufficiently improved. If the content of the graphite to the metal plating is greater than 1 wt%, the amount of dispersing agent also increases, leading to poor plating adhesion and cracking. The reduction in the coefficient of friction also reaches a saturation level, and additional graphite is wastefully included in the metal plating. The content of the graphite to the metal plating is therefore preferably greater than or equal to 0.01 wt% and less than or equal to 1 wt%.

Further preferably, the thickness of the composite plating is greater than or equal to 5 µm and less than or equal to 30 µm.

By mixing an appropriate amount of graphite in the metal plating, the coefficient of friction at the contact surfaces of the sliding friction part or switching part can be further reduced and the wear resistance and lubricity can be improved.

If the thickness of the composite plating is less than 5 µm, sufficient graphite is not mixed with the metal plating and the wear resistance and lubricity cannot be improved.

If the thickness of the composite plating is greater than 30 µm, reduction of the coefficient of friction becomes saturated, unnecessary graphite is contained in the metal plating, variation in the thickness of the composite plating increases, and the dimensional precision required for timepiece components cannot be maintained. The thickness of the composite plating is therefore preferably greater than or equal to 5 µm and less than or equal to 30 µm.

Yet further preferably, the metal plating used to form the composite plating is a nickel plating. This enables more reliably mixing the appropriate amount of graphite in the composite plating of the desired thickness of greater than or equal to 5 µm and less than or equal to 30 µm.

The thickness of the composite plating is the thickness of the composite plating formed by mixing graphite in a metal plating, and if graphite protrudes from the surface of the metal plating, the thickness of the composite plating is the thickness of the metal plating plus the distance the graphite protrudes from the surface of the metal plating. If the graphite layer is formed on the surface of the metal plating, the thickness of the metal plating plus the thickness of the graphite layer is the thickness of the composite plating.

Further preferably, the sliding friction part is a pivot in a wheel train component for a timepiece.

The pivot of a part of a wheel train in a timepiece rotates sliding against another timepiece component as part of the movement for moving the hands of the timepiece, rotates in one direction during normal timepiece operation, and is one timepiece component that is particularly susceptible to wear. The invention can therefore be used to good effect.

Another aspect of the invention is a timepiece that has a timepiece component as described above.

This aspect of the invention affords the same operation and effect as the timepiece component described above.

Other objects and attainments together with a fuller understanding of the invention will become apparent and appreciated by referring to the following description and claims taken in conjunction with the accompanying drawings.

### BRIEF DESCRIPTION OF THE DRAWINGS

FIG. 1 is a schematic plan view of a timepiece according to a first embodiment of the invention.

FIG. 2 is a partial section view of the timepiece.

FIG. 3 is an enlarged view showing the part where the rotor is supported by a jewel.

FIG. 4 is a schematic view of contact between the rotor that has a sliding friction part and the bottom pivot and pivot hole.

FIG. 5 shows the results of a wear test of the composite plating using alumina spheres.

FIG. 6 shows the results of a wear test of the composite plating at different thicknesses.

### DESCRIPTION OF PREFERRED EMBODIMENTS

* Embodiment 1

* General arrangement of an electronically-controlled mechanical timepiece

A first embodiment of the invention is described below with reference to the accompanying figures.

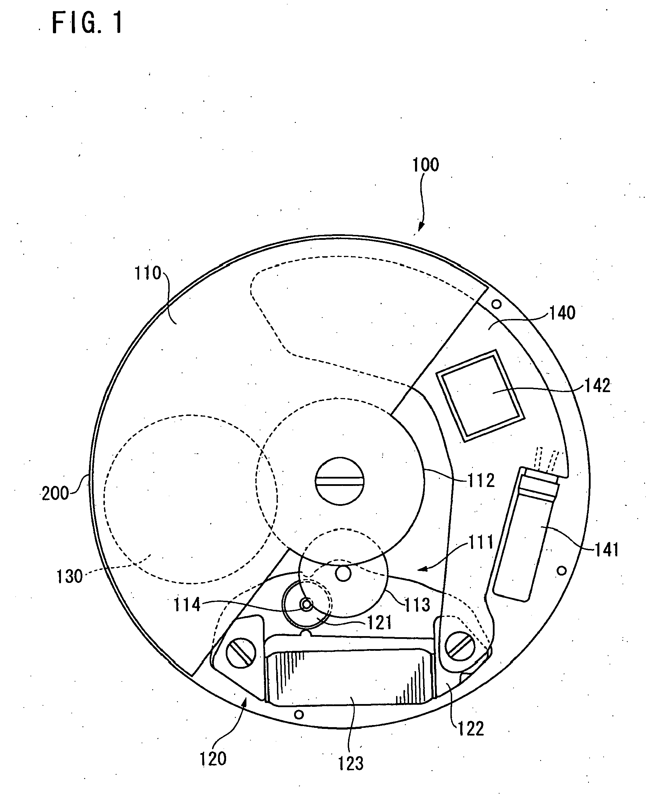

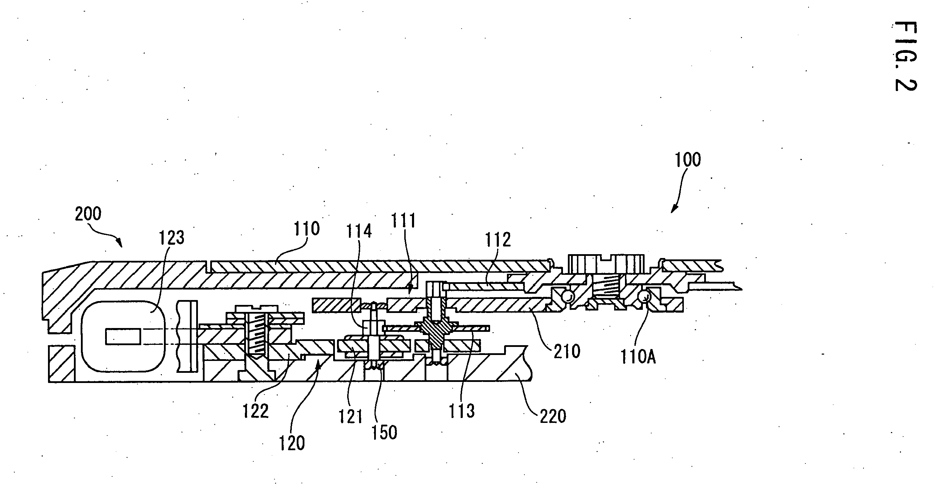

FIG. 1 is a schematic plan view of a timepiece 100 according to this embodiment of the invention, and FIG. 2 is a partial section view of the timepiece 100.

In this embodiment of the invention the timepiece 100 is a wristwatch that derives power from rotation of a rotary pendulum that turns when the wrist moves and stores the produced power in a secondary battery. As shown in FIG. 1 and FIG. 2, the timepiece 100 has a rotary pendulum 110, a speed-increasing wheel train 111 that accelerates and transfers rotation of the rotary pendulum 110, a generator 120 that produces electrical power from the rotation of the rotary pendulum 110, a secondary battery 130 that stores the power produced by the generator 120, and a circuit block 140 that is driven by power from the generator 120 or power stored in the secondary battery 130. These components are part of the movement 200 of the timepiece 100.

The rotary pendulum 110 is a substantially semicircular member with its center of gravity eccentric to the axis of rotation, is made of a heavy metal such as tungsten or an alloy, and is supported rotatably to the movement 200 by an intervening ball bearing 110A (FIG. 2) . A gear wheel 112 that is part of the speed-increasing wheel train 111 is fixed to the rotary pendulum 110.

The speed-increasing wheel train 111 includes the gear wheel 112 fixed to the rotary pendulum 110, an intermediate wheel 113 that meshes with the gear wheel 112, and a rotor pinion 114 that meshes with the intermediate wheel 113.

The generator 120 includes a rotor 121, a stator 122, and a coil 123. The rotor 121 has a permanent magnet that is made of a samarium cobalt material and is polarized with at least two poles. The rotor pinion 114 is fixed to the rotor 121. When the rotary pendulum 110 turns, the rotating motion is accelerated by the gear wheel 112, the intermediate wheel 113, and the rotor pinion 114, and causes the rotor 121 to turn. Rotation of the rotor 121 produces variations in the magnetic field in the stator 122, and these field variations produce an induced current in the coil 123. This induced current is stored in the secondary battery 130.

The circuit block 140 includes a crystal oscillator 141 that produces the reference clock for timekeeping, and a control chip 142. The circuit block 140 and a movement drive motor (not shown in the figure) that drives the hour hand, minute hand, and other hands of the timepiece 100 are driven by power stored in the secondary battery 130.

While not shown in the figures, the control chip 142 also includes a frequency division circuit for frequency dividing the reference clock from the crystal oscillator 141, a timekeeping circuit that counts the reference clock pulses and keeps time, and a control circuit that controls the movement drive motor (not shown in the figure) based on signals from the timekeeping circuit.

* Rotor 121 support structure

As shown in FIG. 2 the rotor 121 is supported freely rotatably between a wheel train bridge 210 and the main plate 220. More specifically, the top and bottom pivot parts of the rotor 121 are supported by jewels in the wheel train bridge 210 and main plate 220.

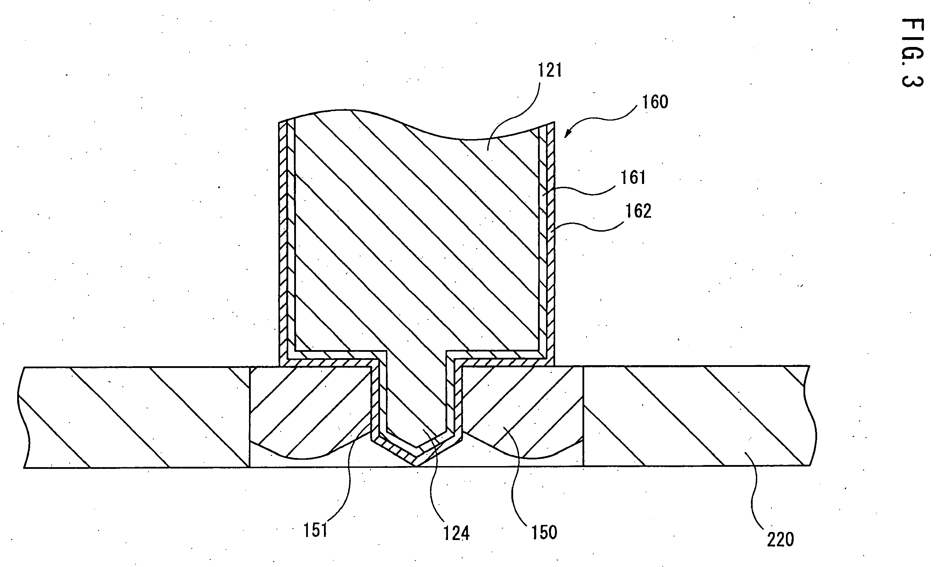

FIG. 3 is an enlarged view of the part where the bottom part of the rotor 121 is supported by the jewel 150. The rotor 121 has a bottom pivot 124 disposed at the bottom part of the rotor 121.

As shown in FIG. 3, the jewel 150 supports the rotor 121 freely rotatably, and in this embodiment of the invention is a ruby with a pivot hole 151 formed in the center.

The contact surfaces of the rotor 121, the bottom pivot 124, and the pivot hole 151 are lubricated with a horological oil.

The support structure of the rotor 121 is described below as an example of a timepiece component with a sliding friction part in this embodiment of the invention. Examples of timepiece components with a switching part include the setting lever (not shown in the figure) of the hand adjusting mechanism and the yoke (not shown in the figure).

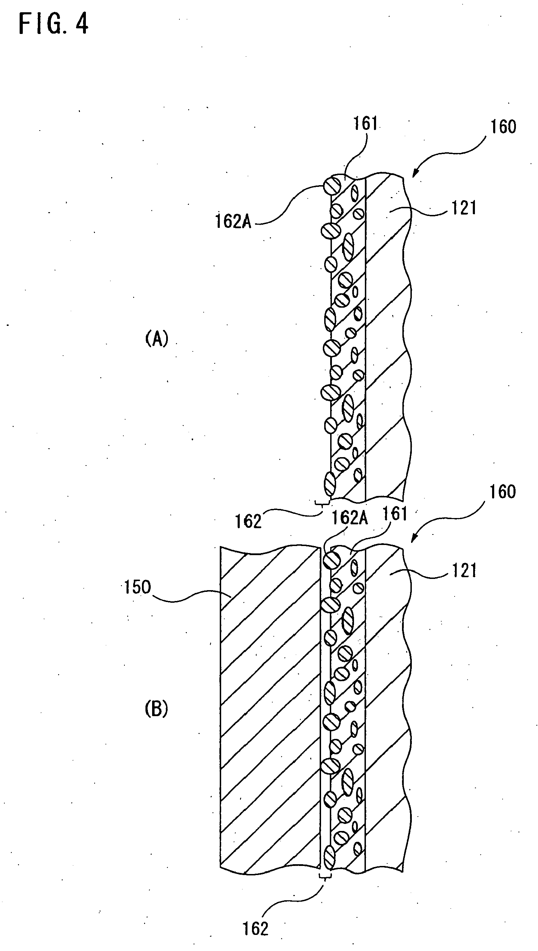

FIG. 4 schematically describes contact between the rotor 121 as the sliding friction part shown in FIG. 3 and the bottom pivot 124 and pivot hole 151.

The surfaces of the rotor 121 and bottom pivot 124 that contact the pivot hole 151 are coated with a composite plating 160 as shown in FIG. 3 and FIG. 4. This composite plating 160 includes a nickel plating 161 and a graphite layer 162. The nickel plating 161 is applied by an electroplating process. The graphite layer 162 is formed by partially exposing graphite 162A at the surface of the nickel plating 161 by using a dispersing agent such as polyacrylic acid.

The rotor 121 and bottom pivot 124 thus slide against the jewel 150 on an intervening graphite layer 162 as shown in FIG. 4.

The nickel plating 161 is coated to a film thickness of greater than or equal to 5 µm and less than or equal to 30 µm.

The graphite layer 162 is formed using substantially spherical particles of graphite 162A that are 40 nm in diameter. Each of the graphite 162A particles is partially or completely embedded in the nickel plating 161, and the portions of the graphite 162A particles that are not completely embedded in the nickel plating 161 form the graphite layer 162.

Note that for descriptive purposes only the size of the graphite 162A particles is shown large relative to the thickness of the nickel plating 161 in FIG. 4.

The content of the graphite 162A to the nickel plating 161 is 0.5 wt%.

The film thickness of the composite plating 160 is the thickness of the nickel plating 161 plus the thickness of the graphite layer 162, and in this embodiment of the invention is greater than or equal to 5 µm and less than or equal to 30 µm.

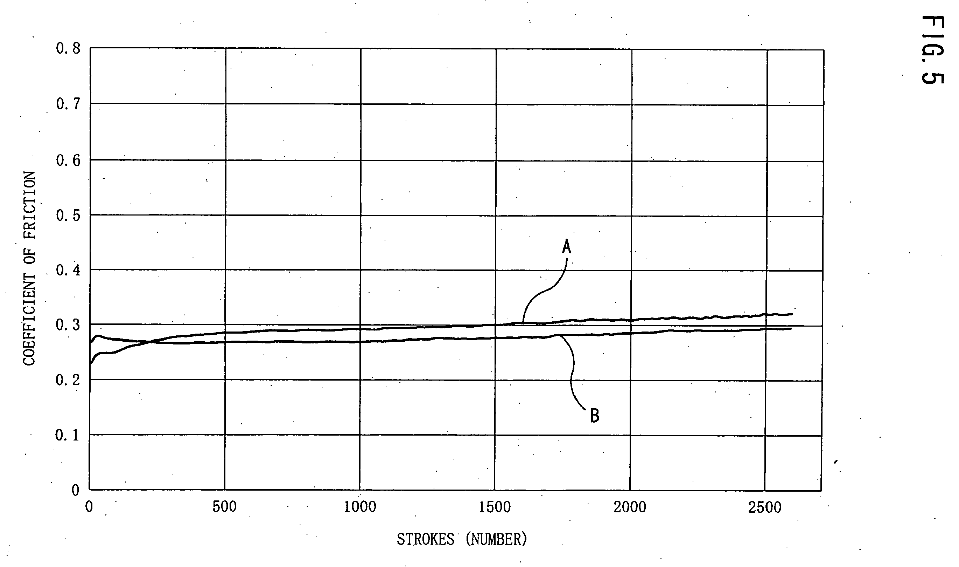

FIG. 5 shows the results of a wear test of the composite plating 160 using alumina spheres.

This test was conducted using a reciprocating pivoted ball-on-plate friction and wear tester. The test samples had a 20 µm thick composite plating formed by an electroplating process on a substrate (high carbon steel, hardness Hv = 700, lapped surface roughness Ra = 5 nm). Alumina spheres (Al₂O₃) (hardness Hv = 1500) were used as the abrasive agent.

The test conditions were a load of 200 g (30 kg/mm2), a stroke of 2 Hz (0.5 Hz/stroke), a stroke length of 10 mm, and total test time of 1400 seconds. The actual load at the center of the stroke on the steel plate on which the composite plating was formed was 100 g. This test is equivalent to a two-month durability test of timepiece components when converted to the sliding between the bottom pivot 124 of the rotor 121 and the jewel 150.

FIG. 5 shows the coefficient of friction on the y-axis and the number of strokes on the x-axis. The results of measurements taken at two different places on the sliding surface of the sample are shown as curves A and B. The contact surfaces were not lubricated.

As shown by curves A and B, the coefficient of friction remains stable at approximately 0.3 wherever the measurement was taken as the number of strokes increased.

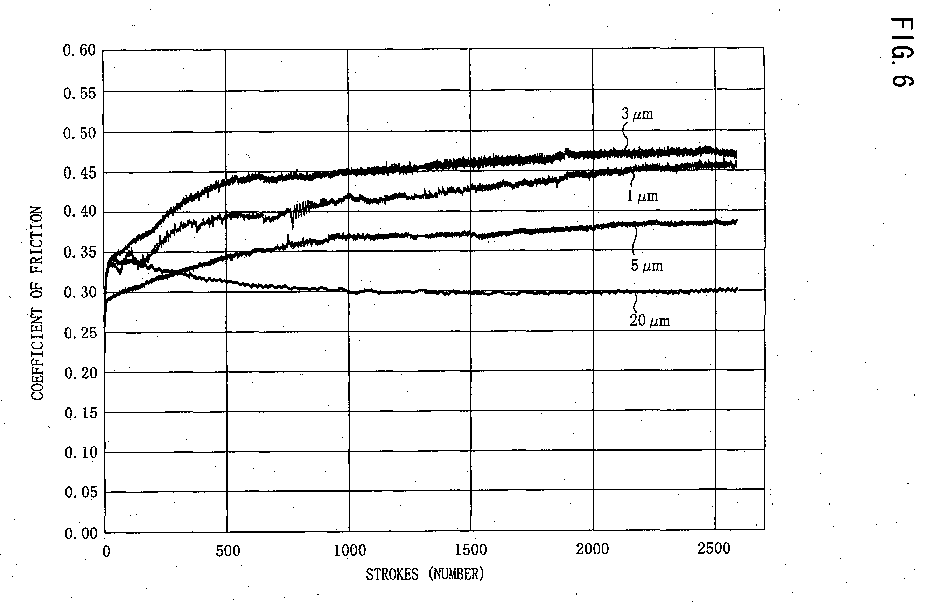

FIG. 6 shows the results of wear tests of the composite plating when the plating thickness was changed using a reciprocating pivoted ball-on-plate friction and wear tester. Except for the plating thickness, the samples, abrasive agent, load, stroke count, and other test conditions were the same for the test results shown in FIG. 6 and the test results shown in FIG. 5. The sliding surfaces were not lubricated.

The coefficient of friction when the composite plating thickness was 1 µm and 3 µm was high at approximately 0.40 to 0.47. This was attributed to the low composite plating thickness resulting in little graphite being present in the composite plating. The coefficient of friction when the composite plating thickness was 5 µm was low at approximately 0.30 to 0.38. The coefficient of friction when the composite plating thickness was 20 µm was even lower and stable at approximately 0.3 µm.

There is no significant decrease in the coefficient of friction when the composite plating thickness exceeds 30 µm so that the composite plating contains even more graphite, and the additional graphite is simply wasted in this case because the coefficient of friction does not continue to decrease proportionally to the increase in graphite content.

In addition to rendering the thickness of the composite plating 160 formed on the surfaces of the rotor 121 and bottom pivot 124 to greater than or equal to 5 µm and less than or equal to 30 µm, this embodiment of the invention achieves an even lower coefficient of friction than shown in FIG. 6 according to the plating thickness by also lubricating with a horological oil.

* Effect of the invention

The timepiece 100 according to this aspect of the invention provides the following benefits.

(1) By coating the contact surfaces of the rotor 121 and bottom pivot 124 with a composite plating 160 by means of an electroplating process that covers fine asperities in the coated surface, the surface of the composite plating 160 can be rendered with sufficiently greater smoothness than when the coating is formed by an electroless process, the coefficient of friction can be reduced, and the wear resistance and lubricity can be improved.

(2) By lubricating the contact surfaces of the rotor 121 and bottom pivot 124 with a horological oil, the lubricating effect of the oil further reduces the coefficient of friction.

(3) Minute high spots on the contact surfaces of the rotor 121 and bottom pivot 124 wear down with use and produce substantially spherical graphite particles, and these substantially spherical graphite particles fill minute recesses in the contact surface. The effect is to further smoothen the surface of the composite plating 160.

(4) The friction coefficient is produced by sliding resistance when the timepiece component is manufactured, but as the timepiece components are used the friction coefficient is produced by rolling resistance. The coefficient of friction therefore decreases further with continued use, and the wear resistance and lubricity are further improved.

(5) By using a nickel plating 161 as the metal plating part of the composite plating 160, the composite plating 160 can be easily formed on timepiece components by an electroplating process. Imparting a nickel plating also protects the timepiece components against corrosion.

(6) Rendering the nickel plating 161 to a film thickness greater than or equal to 5 µm and less than or equal to 30 µm assures that sufficient graphite 162A is mixed with the nickel plating 161, and the dimensional precision required for timepiece components can be maintained.

(7) The graphite layer.162 is formed by using a dispersing agent to partially expose graphite 162A particles at the surface of the nickel plating 161. Lubrication by the graphite thus reduces the coefficient of friction and improves wear resistance and lubricity at the contact surfaces of the rotor 121 and bottom pivot 124.

(8) Because the diameter of the graphite 162A is 40 nm, a sufficient graphite layer 162 can be formed without mixing unnecessary graphite 162A in the nickel plating 161.

(9) Because the nickel plating 161 contains 0.5 wt% graphite 162A, a sufficient graphite layer 162 can be formed, wear resistance and lubricity at the contact surfaces of the rotor 121 and bottom pivot 124 can be desirably improved, and unnecessary graphite 162A is not contained in the nickel plating 161.

(10) By using a rotor 121 and a bottom pivot 124 that have the contact surfaces coated with a composite plating 160, the timepiece 100 can reduce the coefficient of friction and improve the wear resistance and lubricity of the contact surfaces of the rotor 121 and bottom pivot 124.

(11) Because the thickness of the composite plating 160 is greater than or equal to 5 µm and less than or equal to 30 µm, an appropriate amount of graphite 162A can be mixed with the nickel plating 161 and the coefficient of friction can be reduced in the contact surfaces of the rotor 121 and bottom pivot 124.

Furthermore, because the thickness of the composite plating 160 is greater than or equal to 5 µm and less than or equal to 30 µm, variation in the thickness of the composite plating 160 can be suppressed and the dimensional precision required for timepiece components can be maintained.

* Variations of the preferred embodiment

The invention is not limited to the foregoing embodiment of the invention and can be modified and improved in many ways within the scope of the present invention.

For example, the support structure of the rotor 121 is described as an example of a timepiece component with a sliding friction part, and the composite plating 160 is imparted to the contact surfaces of the rotor 121 and the bottom pivot 124. However, the support structure can be that of the intermediate wheel 113 or any other wheel, for example. More specifically, the composite plating can be imparted to any timepiece component that has a sliding friction part.

The composite plating can also be imparted to timepiece components having a switching part, such as the contact surfaces of the setting lever of the hand adjustment mechanism and the yoke.

Furthermore, a nickel plating is used as the metal plating in the embodiment described above, but a different metal plating can be selected. Further alternatively, an alloy plating may be selected.

The thickness of the composite plating 160 is greater than or equal to 5 µm and less than or equal to 30 µm in the foregoing embodiment, but the thickness can differ. More specifically, it is only necessary to coat the contact surface of the sliding friction part or the switching part with the composite plating. To further improve dimensional precision, a thick coating can be formed and then polished to the desired thickness.

The particles of graphite 162A in the foregoing embodiment have a diameter of greater than or equal to 10 nm and less than or equal to 100 nm, but the invention is not so limited and any particle diameter can be used insofar as the composite plating can be applied to the contact surfaces of the sliding friction parts or switching parts.

The graphite layer 162 is formed by partially exposing the graphite 162A particles at the surface of the nickel plating 161 by using a dispersing agent in this embodiment of the invention, but forming a graphite layer 162 is not required. What is important is that the contact surfaces of the sliding friction parts or switching parts is coated with a composite plating.

The content of the graphite 162A to the nickel plating 161 is 0.5 wt% in the above embodiments, but the content is not so limited insofar as the composite plating can be formed on the contact surface of the sliding friction part or switching part.

The contact surfaces of the rotor 121 and the bottom pivot 124 are coated with the composite plating 160 in the above embodiments, but the composite plating 160 can also be formed on the contact surface of the pivot hole 151. Further alternatively, both the contact surfaces of the rotor 121 and the bottom pivot 124 and the contact surface of the pivot hole 151 can be coated with the composite plating 160 to further dramatically improve the wear resistance and lubricity of the sliding friction parts and switching parts compared with forming the composite plating on the contact surface of only one timepiece component.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention.

## Claims

1. A timepiece component comprising a sliding friction part that slides in contact with another timepiece component, or a switching part that changes the contact state with another timepiece component in response to an operation operating the timepiece, wherein:
the contact surface of the sliding friction part or switching part is coated with a composite plating having graphite mixed with a metal plating; and
the composite plating is formed by an electroplating process.

2. The timepiece component described in claim 1, wherein the metal plating is nickel plating.

3. The timepiece component described in claims 1 to 2, wherein:
the composite plating is formed using a dispersing agent; and
the particles of graphite are fully or partially embedded in the metal plating, and the parts of the graphite particles that are not embedded in the metal plating are exposed at the surface of the metal plating and form a graphite layer.

4. The timepiece component described in claims 1 to 3, wherein the diameter of the graphite particles is greater than or equal to 10 nm and less than or equal to 100 nm.

5. The timepiece component described in claims 1 to 4, wherein the content of the graphite to the metal plating is greater than or equal to 0.01 wt% and less than or equal to 1 wt%.

6. The timepiece component described in claims 1 to 5, wherein the thickness of the composite plating is greater than or equal to 5 µm and less than or equal to 30 µm.

7. The timepiece component described in claims 1 to 6, wherein the sliding friction part is a pivot in a wheel train component for a timepiece.

8. A timepiece comprising the timepiece component described in claims 1 to 7.
